# EUROPEAN PATENT APPLICATION

(11) **EP 4 764 740 A1**
(43) Date of publication of application: **24.06.2026**
(21) Application number: 25225102.0
(22) Date of filing: 18.12.2025
(51) Int. Cl.: G05B 11/42, G05B 19/042

(54) **EVENTS-BASED PID CONTROL FUNCTION BLOCK**

(30) Priority: 23.12.2024 US 202463737976 P; 12.05.2025 US 202519205457
(71) Applicant: Schneider Electric Systems USA, Inc., Foxborough, MA 02035 (US)
(72) Inventor: ALZAIN, Qasim Mohammed, FOXBOROUGH, 02035 (US); GHIZAWI, Nidal Awni, 31952 AL KHOBAR (SA); RAMATALLAH, Motwakil Abdallah Mohamed, 34447 AL KHOBAR (SA)
(74) Representative: Plasseraud IP

(57) **Abstract**

An event delay generator (206) associated with the PID control function block (204) receives an output event from the PID control function block and generates an event request in response to receiving the output event. The event delay generator provides the event request to the PID control function block and the PID control function block is configured to execute a PID control loop feedback process in response to event request. The PID control function block drives a process value toward a setpoint using an adaptive threshold that is a function of a moving average of the error between the two values.

## Description

### CROSS-REFERENCE TO RELATED APPLICATION

This application claims the benefit of U.S. Provisional Patent Application No. 63/737,976, filed December 23, 2024, the entire disclosure of which is incorporated herein by reference.

### BACKGROUND

Industrial control systems, which are used within industrial plants to automate plant processes, generally include control devices such as programmable logic controllers (PLCs). The control devices function based on control programs developed for the devices. These programs include function blocks that are assembled to achieve an overall control strategy and drive plant processes to achieve desired outputs. Some examples of function block types include timers, counters, analog input, analog output, and proportional integral derivative (PID) controls. PID control function blocks serve a pivotal role in industrial control systems and are essential function blocks used in many control applications. For example, they are widely used by process control engineers to drive process values to required setpoints.

The conventional approach to PID control function blocks requires the execution of the PID algorithm each cycle (e.g., every 1 second). Cyclic execution is necessary because the integral function of PID represents a summation of error over time.

### SUMMARY

Aspects of the present disclosure transform the way function blocks execute from cyclic execution to event-based execution and, in particular, permit event-based execution of PID control function blocks, such as those compatible with the IEC 61499 standard. Given there is an integration part in the calculation of PID control, this function block, unlike other function blocks, requires cyclical execution. Advantageously, aspects of the present disclosure transform the PID control function block from cyclic to event-based execution.

In an aspect, a controller is configured to execute PID control application controlling an operation as defined in the claims.

In another aspect, a method of event-based execution of a PID control application controls an operation as defined in the claims.

Other objects and features of the present invention will be in part apparent and in part pointed out herein.

### BRIEF DESCRIPTION OF THE DRAWINGS

FIG. 1 is a schematic diagram illustrating an example of assembling a PID function block in IEC 61499 to be executed according to the prior art.
FIG. 2 is a schematic diagram illustrating an example execution architecture of a controller according to an embodiment.
FIG. 3 illustrates an example of measurement criteria suitable for use with event-based execution of a PID control function block according to an embodiment.
FIGS. 4A and 4B illustrate example process control behavior resulting from an adaptive threshold according to an embodiment.
FIGS. 5A and 5B further illustrate example process control behavior resulting from an adaptive threshold according to an embodiment.
FIG. 6 shows a comparison of executing a PID control function block on a cyclic basis to executing a PID control function block on an event basis according to an embodiment.
FIG. 7 illustrates an example process for event-based execution of a PID control application according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

The need for distributed control topologies has resulted in the development of a programming language standard such as IEC 61499, which is an international standard published by International Electrotechnical Commission dedicated to distributed (event-based) industrial applications. Generally, IEC 61499 defines a generic architecture that enables an application-centric design in which one or more applications, defined by networks of interconnected function blocks, are created for the whole system and subsequently distributed to available devices. A function block is a convenient programming mechanism that consolidates a group of programming instructions to perform a specific and normalized action, such as speed control, interval control, or counting. A function block may comprise configuration data, a set of internal or external operating parameters and usually one or more data inputs and outputs. All devices within a system are described within a device model and the topology of the system is reflected by the system model. IEC 61499 addresses the topic of a function blocks-based, distributable control application for industrial process measurement and control systems.

In the IEC 61499 architectural model, distributable applications are built by interconnecting instances of reusable function block types with appropriate event and data connections in the same manner as designing a circuit board with integrated circuits. Using IEC 61499-compliant software tools, these function blocks can be distributed and then deployed across a network to a runtime component of physical devices (controllers) compliant with IEC 61499. In this manner, distributed control and automation systems are configurable from libraries of reusable IEC 61499-compliant components.

According to this standard, control application execution is event-driven, where events represent changes in the system's state or conditions, unlike the classical scan-based distributed control systems. The IEC 61499 standard also specifies a set of software components and applications that an implementer of the standard must implement or develop.

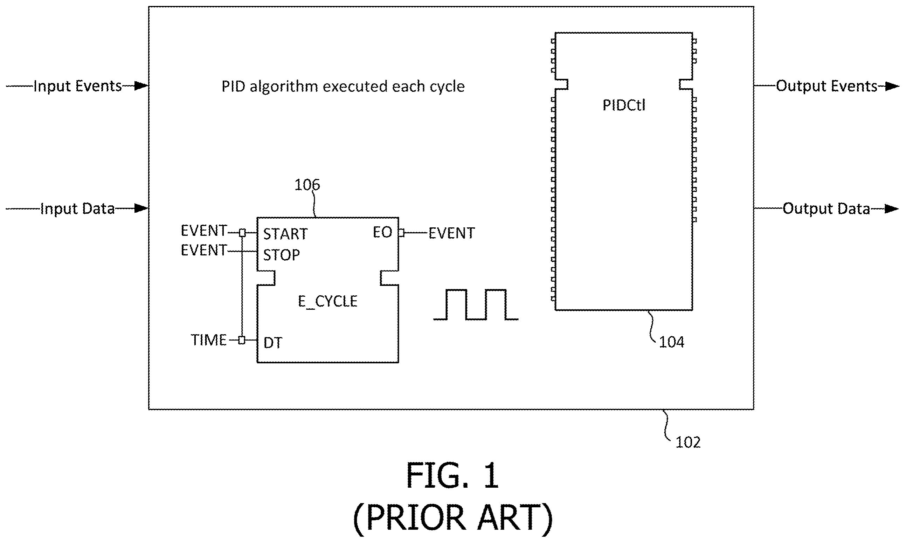

As described above, PID control is control loop feedback mechanism that plays a pivotal part in process control field. It is widely used by process control engineers to drive process values to a required setpoint. The setpoint, in PID control, is a target value set by a user. The main objective of PID control is to ensure that the process value reaches the setpoint. FIG. 1 is a simplified schematic diagram illustrating an example execution architecture of a controller 102 in accordance with the prior art. In this instance, the controller 102 executes a PID control function block 104 on a cyclic basis even though the IEC 61499 standard defines an event driven execution model. The event driven execution model allows an explicit specification of the execution order of function blocks. If necessary, periodically executed applications, such as the PID control function block 104, are implemented by using a cyclic event generator 106 for the generation of periodic events. A process may need to perform certain procedures cyclically and because IEC 61499 function blocks need event input to begin execution of an application, the cyclic event generator 106, implemented as a timer function block (e.g., E_CYCLE function block), is necessary. The function of the E_CYCLE function block is to generate an event request cyclically defined by a time constant specified by user. Data input DT is the time constant.

PID control function blocks are essential function blocks used in many control applications. For example, they are widely used by process control engineers to drive process value to required setpoints. The IEC 61499 standard fundamentally transforms the way function blocks execute from cyclic execution to event-based execution. But PID function blocks, which necessarily perform an integration function in the calculation of PID control, must be executed cyclically counter to event-based execution. Advantageously, aspects of the present disclosure permit event-based execution of PID control function blocks, such as those compatible with the IEC 61499 standard. It is to be understood that aspects of the present disclosure are applicable to other PID control function blocks and those compatible with the IEC 61499 standard are just one example type of function block that may utilize and benefit from the disclosed techniques. For example, aspects of the present disclosure may be applied to any event-based system or any cyclic-based system having a mechanism to introduce events.

In legacy control systems, for instance, where the control application is executed in a cyclical manner, PID function blocks were executed within a predefined period and error was summed over time. With the introduction of events-based systems, events were introduced to mimic the behavior of the legacy control systems of executing PID function blocks within predefined periods. This was to overcome the limitation of an integral part of the PID. Although this "work-around" is available, it does not actually shift PID to events-based execution. As described herein, aspects of the present disclosure address the shortcomings of the legacy control systems by implementing the PID in a true event-based execution such that it is dependent on events.

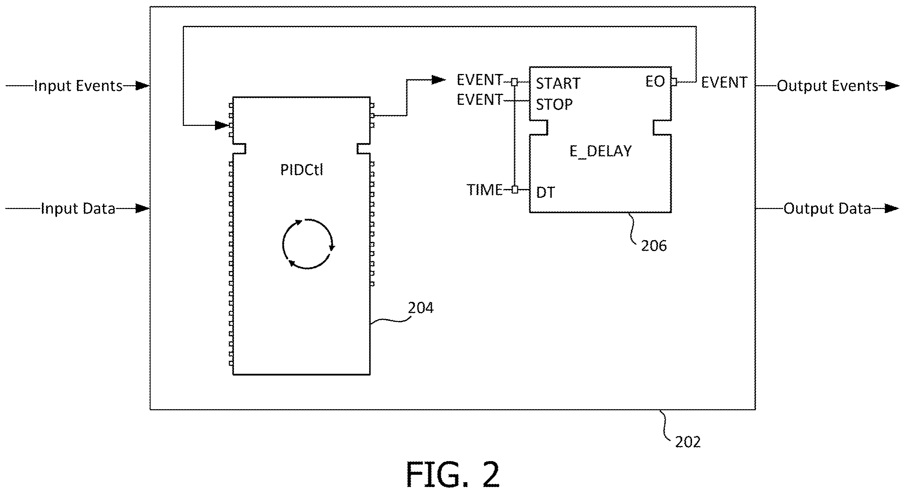

As described herein with respect to the present disclosure, "event-based" refers to native or true event-based as well as "pseudo" event-based standards (e.g. cyclic-based standards that mimic, or otherwise attempt to emulate, an event-based standard). FIG. 2 is a simplified schematic diagram illustrating an example execution architecture of a controller 202 in accordance with aspects of the present disclosure. In this instance, the controller 202 executes a PID control function block 204 according to an event driven execution model compatible with the IEC 61499 standard, another native event-based standard, or a pseudo event-based standard for controlling an operation. In other words, controller 202 does not execute the PID control function block 204 on a cyclical basis in the absence of an event. Instead, PID function block 204 is responsive to new events, such as changes in setpoint or new input values. The event driven execution model allows an explicit specification of the execution order of function blocks. An event delay generator 206, implemented as a timer function block (e.g., E_DELAY function block), generates an event request. The E_DELAY function block is defined in the IEC 61499 standard and permits delayed propagation of an event. An event at EO is generated at a time interval DT after the occurrence of an event at the START input. The event delay is canceled by an occurrence of an event at the STOP input. If multiple events occur at the START input before the occurrence of an event at EO, only a single event occurs at EO, at a time DT after the first event occurrence at the START input. No event delay will be initiated if an event occurs at the START input with a value of DT which is not greater than t # 0 s.

Rather than generating the event request cyclically defined by a time constant, the event delay generator 206 makes the event request. In an embodiment, upon receiving a new event, controller 202 executes checks and only if those checks are satisfied then PID control 204 sends a request to E_DELAY block 206 waiting for a predetermined time delay DT to be elapsed before a new execution request is received. In this manner, PID control 204 has the ability to execute based on events rather than running cyclically such that aspects of the present disclosure implement an event-based IEC 61499 PID function block.

By transforming PID control function blocks to event-based execution, aspects of the present disclosure (a) reduce execution load on the controller 202 executing PID control function block 204 as it is executing on events-based execution rather than cyclic execution, and (b) reduce the control footprint given the fact that the controller 202 is able to accommodate more function blocks as a result of reducing execution load.

As described above, aspects of the present disclosure are particularly beneficial in transforming the way function blocks execute from cyclic execution to event-based execution. Cyclic-based PID algorithms (e.g., based on the IEC 61131 standard) may be converted to event-based by triggering events based on a specified time increment to mimic their cyclic behavior.

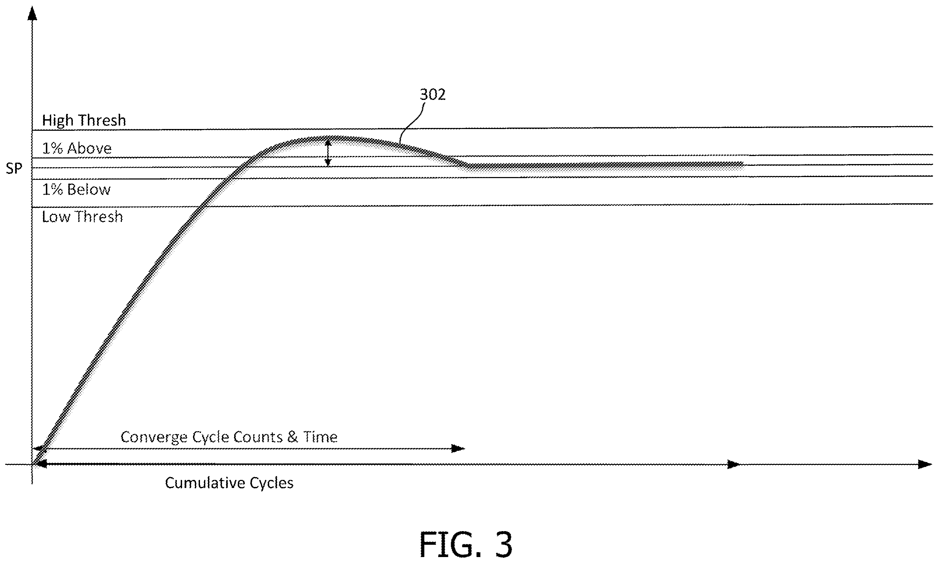

FIG. 3 illustrates an example of measurement criteria suitable for use with event-based execution of PID function block 204. In the example graph of FIG. 3, a setpoint is centered between a high threshold and a low threshold. A graph 302 indicates the process value converging within the high and low thresholds at the setpoint.

In an embodiment, PID function block 204 operates in accordance with an adaptive threshold for driving the process value to a particular setpoint. The adaptive threshold represents upper (high thresh) and lower (low thresh) thresholds that change as a function of the error between the process value and the setpoint. For example, the upper and lower thresholds are modified as a function of a moving average of the error between the process value and the setpoint. The PID function block 204 continues executing (e.g., repeatedly executes) until the process value is within the adaptive upper and lower thresholds based on the moving average of the error. In other words, the moving average of the error decreases as the process value approaches the setpoint, which causes the thresholds to converge, and PID function block 204 executes until the process value is within the threshold. In an embodiment, the moving average is based on a configurable number of values of the error between the process value and the setpoint.

TABLE 1 is an example of an adaptive threshold based on a moving average. In this example, the moving average is subtracted from the setpoint to define the lower threshold and the moving average is added to the setpoint to define the higher threshold. If displayed with the data, a moving average would be shown to lag, or follow, the data. In the example of TABLE 1, the setpoint = 10 and the moving average is based on 10 values. The number of values for the moving average (10 in this example) is configurable. After an initial period, the lower threshold increases and the upper threshold decreases to converge nearer the setpoint.

**TABLE 1**

| **SP** | **PV** | **Absolute Error \|SP-PV \|** | **Moving Average(10)** | **Low Thresh (SP-Average)** | **High Thresh (SP+Average)** |
|---|---|---|---|---|---|
| 10 | 0 | 10 | 1 | 9 | 11 |
| 10 | 0 | 10 | 2 | 8 | 12 |
| 10 | 0 | 10 | 3 | 7 | 13 |
| 10 | 0 | 10 | 4 | 6 | 14 |
| 10 | 0 | 10 | 5 | 5 | 15 |
| 10 | 0 | 10 | 6 | 4 | 16 |
| 10 | 0 | 10 | 7 | 3 | 17 |
| 10 | 0 | 10 | 8 | 2 | 18 |
| 10 | 0 | 10 | 9 | 1 | 19 |
| 10 | 0 | 10 | 10 | 0 | 20 |
| 10 | 0 | 10 | 10 | 0 | 20 |
| 10 | 0.01945496 | 9.980545044 | 9.998054504 | 0.001945496 | 19.9980545 |
| 10 | 0.04154285 | 9.958457146 | 9.993900219 | 0.006099781 | 19.99390022 |
| 10 | 0.06398708 | 9.936012918 | 9.987501511 | 0.012498489 | 19.98750151 |
| 10 | 0.08647953 | 9.913520466 | 9.978853557 | 0.021146443 | 19.97885356 |
| 10 | 0.10897851 | 9.891021487 | 9.967955706 | 0.032044294 | 19.96795571 |
| 10 | 0.13147838 | 9.868521625 | 9.954807869 | 0.045192131 | 19.95480787 |
| 10 | 0.15397836 | 9.846021644 | 9.939410033 | 0.060589967 | 19.93941003 |
| 10 | 0.17647835 | 9.823521647 | 9.921762198 | 0.078237802 | 19.9217622 |
| 10 | 0.19897835 | 9.801021647 | 9.901864362 | 0.098135638 | 19.90186436 |
| 10 | 0.22147835 | 9.778521647 | 9.879716527 | 0.120283473 | 19.87971653 |
| 10 | 0.24397835 | 9.756021647 | 9.857264187 | 0.142735813 | 19.85726419 |
| 10 | 0.26607396 | 9.733926039 | 9.834811077 | 0.165188923 | 19.83481108 |
| 10 | 0.28819701 | 9.711802994 | 9.812390084 | 0.187609916 | 19.81239008 |
| 10 | 0.31035682 | 9.689643185 | 9.790002356 | 0.209997644 | 19.79000236 |

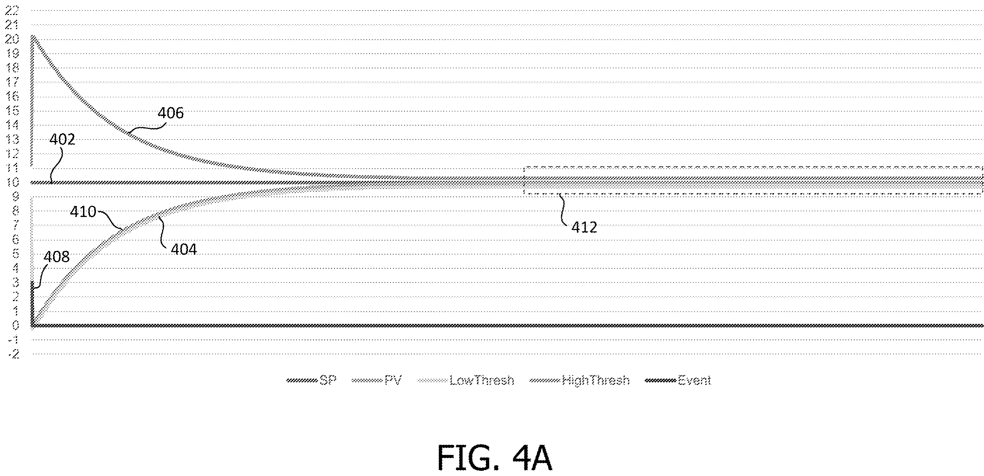

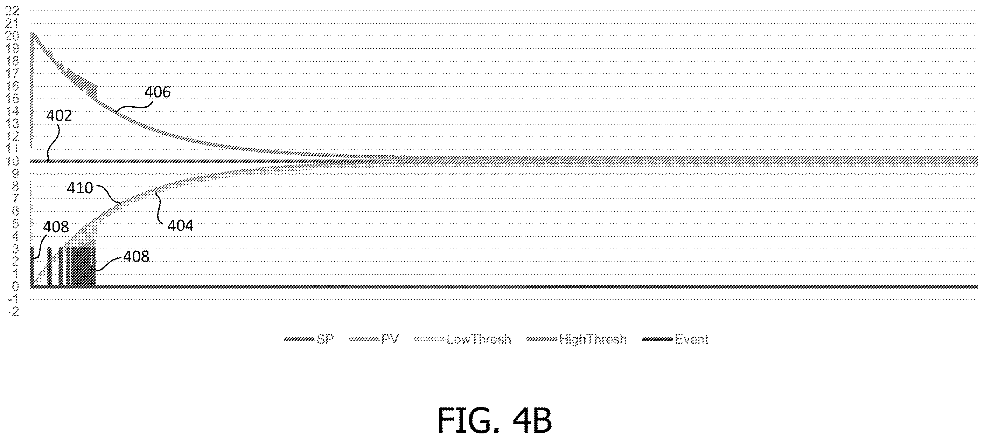

Referring now to FIG. 4A, an example process control behavior resulting from an adaptive threshold is shown. In this example, a setpoint = 10 is illustrated at 402. A lower threshold, indicated at 404, begins at 0 and an upper threshold, indicated at 406, begins at 20. In response to an event at 408, PID control function block 204 begins driving a process value 410 toward the setpoint 402. The lower and upper thresholds, 404, 406 adapt based on the moving average of error, for example, and begin converging toward setpoint 402. Another example process control behavior, as shown in FIG. 4B, illustrates PID control executing based on multiple events 408.

In a preferred embodiment, the moving average is clamped at a relatively small configurable value (e.g., 1%) to prevent the upper and lower thresholds 404, 406 from converging equal to setpoint 402. If upper and lower thresholds 404, 406 overlap setpoint 402, PID control function block 204 would be always executing based on events because the moving average of error would go to zero. The process value 410 could not remain between the thresholds 404,406 as they would be equal to each other. FIG. 4A illustrates a region 412 in which the variance with respect to setpoint 402 is within 1%. In an embodiment, variance as used herein has been modified such that it is with respect to the setpoint 402 rather than with respect to a moving average of the error. The variance is calculated as the summation of the distance of all points with respect to SP divided by the number of samples. In an embodiment, for ease of calculation, the same moving average period may be used in order to have one configurable parameter instead of two. Advantageously, the adaptive threshold reduces the amount of overshoot while still providing for a reduced number of cycles needed to achieve acceptable PID control.

TABLE 2 is an example of an adaptive threshold based on a moving average of error in which variance decreases as the variance compared to the setpoint converges within 1%. It is to be understood that clamping at 1% is configurable to permit either a wider or narrower band between the thresholds 404, 406.

**TABLE 2**

| **Time** | **SP** | **PV** | **Distance between SP,PV** | **Error** | **Variance** | **Need to Execute** |
|---|---|---|---|---|---|---|
| 1 | 10 | 9.90004809 | 0.009990384 | 0.09995191 | | |
| 2 | 10 | 9.90027688 | 0.0099447 | 0.09972312 | | |
| 3 | 10 | 9.90050515 | 0.009899225 | 0.09949485 | | |
| 4 | 10 | 9.9007329 | 0.009853958 | 0.0992671 | | |
| 5 | 10 | 9.90096012 | 0.009808897 | 0.09903988 | | |
| 6 | 10 | 9.90118683 | 0.009764043 | 0.09881317 | | |
| 7 | 10 | 9.90141301 | 0.009719394 | 0.09858699 | | |
| 8 | 10 | 9.90163868 | 0.009674949 | 0.09836132 | | |
| 9 | 10 | 9.90186383 | 0.009630707 | 0.09813617 | | |
| 10 | 10 | 9.90208847 | 0.009586668 | 0.09791153 | 0.00978729 | TRUE |
| 11 | 10 | 9.90231259 | 0.00954283 | 0.09768741 | 0.00974254 | FALSE |
| 12 | 10 | 9.9025362 | 0.009499193 | 0.0974638 | 0.00969799 | FALSE |
| 13 | 10 | 9.9027593 | 0.009455755 | 0.0972407 | 0.00965364 | FALSE |
| 14 | 10 | 9.90298188 | 0.009412515 | 0.09701812 | 0.0096095 | FALSE |
| 15 | 10 | 9.90320396 | 0.009369473 | 0.09679604 | 0.00956555 | FALSE |
| 16 | 10 | 9.90342553 | 0.009326629 | 0.09657447 | 0.00952181 | FALSE |
| 17 | 10 | 9.90364659 | 0.00928398 | 0.09635341 | 0.00947827 | FALSE |
| 18 | 10 | 9.90386715 | 0.009241526 | 0.09613286 | 0.00943493 | FALSE |
| 19 | 10 | 9.9040872 | 0.009199266 | 0.09591281 | 0.00939178 | FALSE |
| 20 | 10 | 9.90430674 | 0.0091572 | 0.09569326 | 0.00934884 | FALSE |
| 21 | 10 | 9.90452579 | 0.009115326 | 0.09547421 | 0.00930609 | FALSE |
| 22 | 10 | 9.90474433 | 0.009073643 | 0.09525567 | 0.00926353 | FALSE |
| 23 | 10 | 9.90496237 | 0.009032151 | 0.09503763 | 0.00922117 | FALSE |
| 24 | 10 | 9.90517992 | 0.008990849 | 0.09482009 | 0.009179 | FALSE |
| 25 | 10 | 9.90539696 | 0.008949735 | 0.09460304 | 0.00913703 | FALSE |
| 26 | 10 | 9.90561351 | 0.00890881 | 0.09438649 | 0.00909525 | FALSE |
| 27 | 10 | 9.90582956 | 0.008868071 | 0.09417044 | 0.00905366 | FALSE |
| 28 | 10 | 9.90604512 | 0.008827519 | 0.09395488 | 0.00901226 | FALSE |
| 29 | 10 | 9.90626019 | 0.008787153 | 0.09373982 | 0.00897105 | FALSE |
| 30 | 10 | 9.90647476 | 0.008746971 | 0.09352524 | 0.00893002 | FALSE |

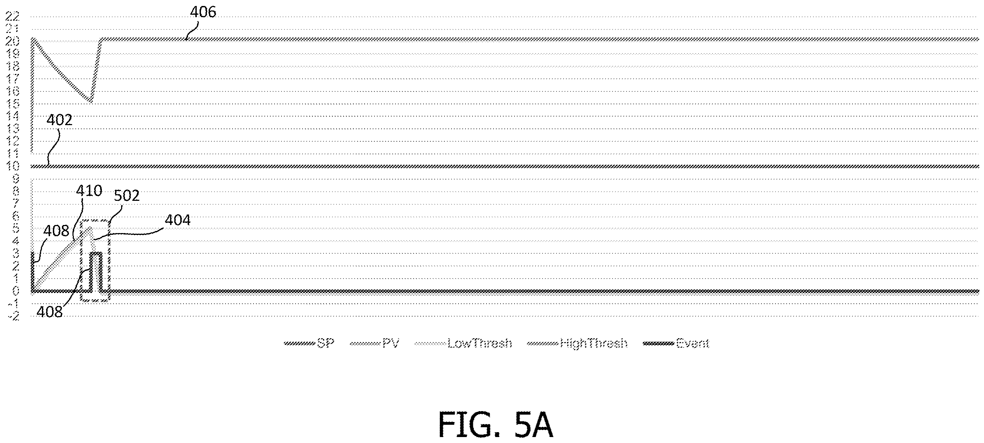

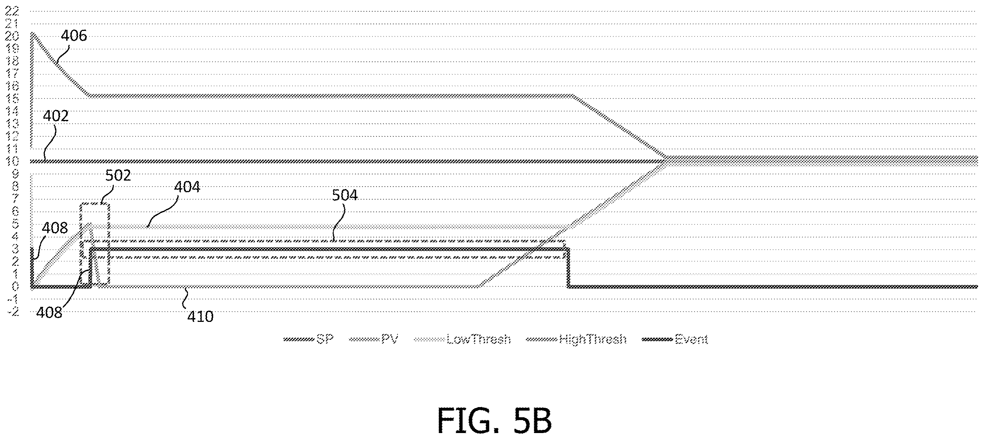

Referring now to FIGS. 5A and 5B, the illustrated example process control behaviors demonstrate a determination of whether the moving average, as used to determine the adaptive threshold, is moving in the correct direction. When a new event 408 occurs, such as receiving a measurement value, it is unknown whether the process value 410 is moving away from or toward the setpoint 402. FIG. 5A illustrates a region 502 in which the one of the events 408 triggers execution of the PID control but, in this instance, the error is increasing. Without correction, if process value 410 is moving away from setpoint 402 but still within the band defined by thresholds 404, 406, the PID control function block 204 continues to execute. The increasing error results in the average moving in the wrong direction thus causing the thresholds 404, 406 to diverge. As the thresholds 404, 406 diverge, the control drives process value 410 away from setpoint 402. As shown in FIG. 5B, indicated generally at reference character 504, the moving error calculation is halted when the error is increasing to clamp thresholds 404, 406 until the process value 410 is driven within thresholds 404, 406. In other words, the last value of moving average is used (i.e., the adaptive threshold is clamped) until the error begins to decrease.

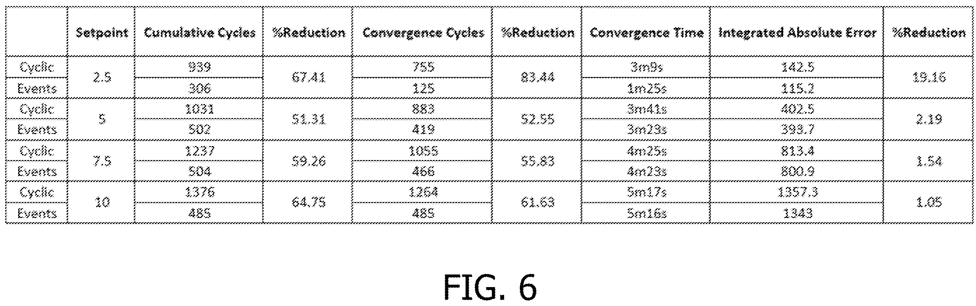

FIG. 6 provides a comparison of controller 102 executing PID control function block 104 on a cyclic basis to controller 102 executing PID control function block 204 on an event basis in accordance with aspects of the present disclosure. As shown in FIG. 6, aspects of the present disclosure achieve PID control in fewer cycles and less time and with improved accuracy. Integrated Absolute Error is a measure of how well PID is capable of reducing the error, where a smaller value indicates more efficient PID actions. Aspects of the present disclosure demonstrate that performance of events-based execution in accordance with one or more embodiments is not deteriorated in comparison conventional cyclic execution.

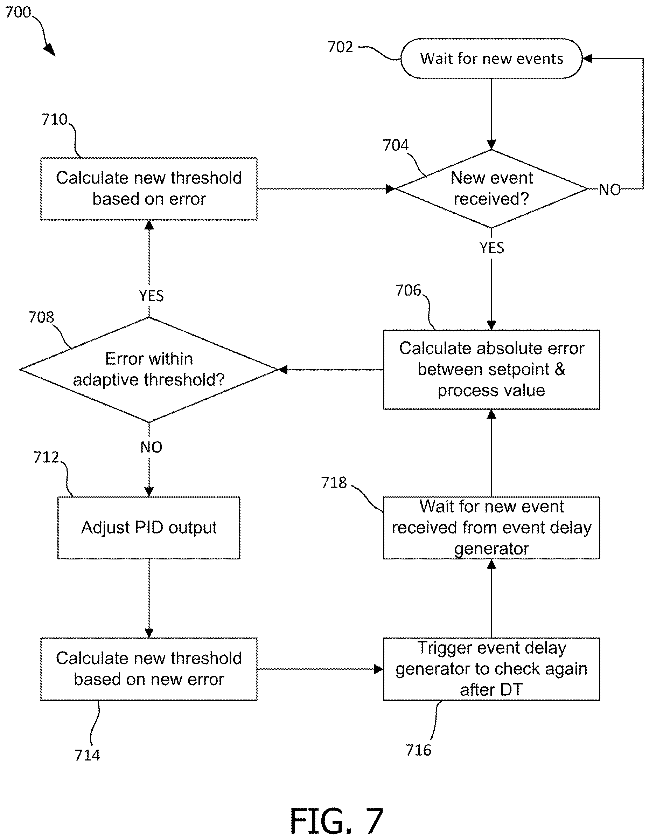

FIG. 7 illustrates an example process 700 for event-based execution of a PID control application according to an embodiment. Beginning at 702, the controller 202 waits for a new event and if a new event is received, as determined at 704, the process 700 proceeds to 706 for calculating the absolute error between the process value and the setpoint. At 708, the process 700 determines if the calculated absolute error is within the adaptive threshold described above. If so, process 700 adjusts the threshold based on the error at 710 and then returns to 704 to check for additional new events. The process 700 returns to 702 to wait for new events if there are no new events as determined at 704.

If the calculated error is outside the adaptive threshold, as determined at 708, controller 202 adjust the PID output at 712 and calculates a new adaptive threshold at 714 based on this error. According to the example process 700, controller 202 triggers event delay generator 206 at 706 to wait for the predetermined time delay DT and then check again for a new event from event delay generator 206 at 718. The process 700 returns to 706 for calculating the absolute error between the process value and the setpoint.

In an aspect, a method for transforming PID control function blocks in a PID control application to event-based execution comprises configuring select ones of a plurality of PID control function blocks to receive event data at first respective inputs of the select ones of the plurality of PID control function blocks. The method also includes configuring the select ones of the plurality of PID control function blocks to receive input data at second respective inputs of the select ones of the plurality of PID control function blocks. The select ones of the plurality of PID control function blocks are configured to execute in response to the event data and be responsive to the event data and the input data to generate corresponding output event data and output data. The output data includes adaptive thresholds or setpoints, wherein by configuring the select ones of the plurality of PID control function blocks to execute based on events rather than cyclic execution, execution load on the PID controller is reduced, and the footprint is reduced given the fact that the controller is able to accommodate more function blocks as a result of reducing the execution load.

Although the present disclosure relates to PID control function blocks compatible with the IEC 61499 standard, it is to be understood that such functions blocks are just one example type of function block that may utilize and benefit from the disclosed techniques.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

Some examples are disclosed below in the form of numbered clauses.

Clause 1. A controller configured to execute a proportional integral derivative (PID) control application for controlling an operation, the controller comprising:
a PID control function block configured to execute a PID control loop feedback process in response to one or more input events, the PID control function block generating one or more output events based on the PID control loop feedback process; and
an event delay generator associated with the PID control function block for receiving the one or more output events from the PID control function block, the event delay generator configured to generate an event request in response to receiving the one or more output events;
wherein the event delay generator provides the event request to the PID control function block, and
wherein the PID control function block is further configured to execute the PID control loop feedback process in response to event request.

Clause 2. The controller of clause 1, wherein the event delay generator comprises an E_DELAY function block.

Clause 3. The controller of any one of clause 1-2, wherein the event delay generator generates the event request after a predetermined delay, and wherein the PID control function block comprises processor-executable instructions that, when executed, configure the controller to perform the PID control loop feedback process.

Clause 4. The controller of any one of clause 1-3, wherein the PID control function block operates in accordance with an event driven execution model compatible with IEC 61499.

Clause 5. The controller of any one of clause 1-4, wherein the one or more input events to the PID control function block represents a setpoint and a process value and the one or more output events of the PID control function block represents a control action, and wherein of the PID control loop feedback process comprises an adaptive threshold for driving the process value toward the setpoint.

Clause 6. The controller of clause 5, wherein the adaptive threshold comprises a range defined by upper and lower thresholds.

Clause 7. The controller of clause 6, wherein the upper and lower thresholds change as a function of a moving average of an error between the process value and the setpoint and wherein the moving average is clamped to prevent the upper and lower thresholds from converging equal to the setpoint.

Clause 8. The controller of clause 7, wherein the adaptive threshold is frozen while the PID control function block repeatedly executes until the error between the process value and the setpoint begins to decrease.

Clause 9. A method of event-based execution of a proportional integral derivative (PID) control application for controlling an operation, the PID control application comprising at least one PID control function block, the method comprising:
configuring the PID control function block to execute a PID control loop feedback process in response to one or more input events;
generating, by the PID control function block, one or more output events based on the PID control loop feedback process;
receiving, by an event delay generator associated with the PID control function block, the one or more output events from the PID control function block, wherein the event delay generator is configured to generate an event request in response to receiving the one or more output events;
receiving, by the PID control function block, the event request from the event delay generator; and
configuring the PID control function block to execute the PID control loop feedback process in response to event request.

Clause 10. The method of clause 9, wherein the event delay generator comprises an E_DELAY function block.

Clause 11. The method of any one of clause 9-10, further comprising generating, by the event delay generator, the event request after a predetermined delay in response to receiving the one or more output events from the PID control function block at a start input of the event delay generator.

Clause 12. The method of any one of clause 9-11, wherein the PID control function block executes the PID control loop feedback process in accordance with an event driven execution model compatible with IEC 61499.

Clause 13. The method of any one of clause 9-12, wherein the one or more input events to the PID control function block represents a setpoint and a process value and the one or more output events of the PID control function block represents a control action, and further comprising driving the process value toward the setpoint by the PID control loop feedback process using an adaptive threshold.

Clause 14. The method of clause 13, further comprising defining the adaptive threshold as a range between upper and lower thresholds.

Clause 15. The method of clause 14, further comprising modifying the upper and lower thresholds as a function of a moving average of an error between the process value and the setpoint and clamping the moving average to prevent the upper and lower thresholds from converging equal to the setpoint.

Clause 16. The method of clause 15, further comprising freezing the adaptive threshold while the PID control function block repeatedly executes until the error between the process value and the setpoint begins to decrease.

Clause 17. The method of clause 13, further comprising configuring the PID control function block to repeatedly execute until the process value is within the adaptive threshold.

Clause 18. A method of event-based execution of a proportional integral derivative (PID) control application for controlling an operation, the PID control application comprising at least one PID control function block, the method comprising:
configuring the PID control function block to execute a PID control loop feedback process in response to a setpoint;
generating, by the PID control function block, one or more outputs based on the PID control loop feedback process;
defining an adaptive threshold as a range between upper and lower thresholds;
modifying the upper and lower thresholds as a function of an error between a process value and the setpoint;
driving the process value toward the setpoint by the outputs of the PID control loop feedback process using the adaptive threshold; and
configuring the PID control function block to repeatedly execute until the process value is within the adaptive threshold.

Clause 19. The method of clause 18, wherein the upper and lower thresholds are modified as a function of a moving average of the error between a process value and the setpoint and further comprising clamping the moving average to prevent the upper and lower thresholds from converging equal to the setpoint.

Clause 20. The method of any one of clause 18-19, further comprising freezing the adaptive threshold while the PID control function block repeatedly executes until the error between the process value and the setpoint begins to decrease.

## Claims

1. A controller (202) configured to execute a proportional integral derivative (PID) control application for controlling an operation, the controller comprising:
a PID control function block (204) configured to execute a PID control loop feedback process in response to one or more input events, the PID control function block (204) generating one or more output events based on the PID control loop feedback process; and
an event delay generator (206) associated with the PID control function block (204) for receiving the one or more output events from the PID control function block (204), the event delay generator (206) configured to generate an event request in response to receiving the one or more output events;
wherein the event delay generator (206) provides the event request to the PID control function block (204), and
wherein the PID control function block (204) is further configured to execute the PID control loop feedback process in response to event request.

2. The controller of claim 1, wherein the event delay generator (206) comprises an E_DELAY function block.

3. The controller of any one of preceding claims, wherein the event delay generator (206) generates the event request after a predetermined delay, and wherein the PID control function block (204) comprises processor-executable instructions that, when executed, configure the controller to perform the PID control loop feedback process.

4. The controller of any one of preceding claims, wherein the PID control function block (204) operates in accordance with an event driven execution model compatible with IEC 61499.

5. The controller of any one of preceding claims, wherein the one or more input events to the PID control function block (204) represents a setpoint and a process value and the one or more output events of the PID control function block (204) represents a control action, and wherein of the PID control loop feedback process comprises an adaptive threshold for driving the process value toward the setpoint.

6. The controller of claim 5, wherein the adaptive threshold comprises a range defined by upper and lower thresholds.

7. The controller of claim 6, wherein the upper and lower thresholds change as a function of a moving average of an error between the process value and the setpoint and wherein the moving average is clamped to prevent the upper and lower thresholds from converging equal to the setpoint.

8. A method of event-based execution of a proportional integral derivative (PID) control application for controlling an operation, the PID control application comprising at least one PID control function block (204), the method comprising:
configuring the PID control function block (204) to execute a PID control loop feedback process in response to one or more input events;
generating, by the PID control function block (204), one or more output events based on the PID control loop feedback process;
receiving, by an event delay generator (206) associated with the PID control function block (204), the one or more output events from the PID control function block (204), wherein the event delay generator (206) is configured to generate an event request in response to receiving the one or more output events;
receiving, by the PID control function block (204), the event request from the event delay generator (206); and
configuring the PID control function block (204) to execute the PID control loop feedback process in response to event request.

9. The method of claim 8, wherein the event delay generator (206) comprises an E_DELAY function block.

10. The method of claim 8 or claim 9, further comprising generating, by the event delay generator (206), the event request after a predetermined delay in response to receiving the one or more output events from the PID control function block (204) at a start input of the event delay generator (206).

11. The method of any one of claims 8 to 10, wherein the PID control function block (204) executes the PID control loop feedback process in accordance with an event driven execution model compatible with IEC 61499.

12. The method of any one of claims 8 to 10, wherein the one or more input events to the PID control function block (204) represents a setpoint and a process value and the one or more output events of the PID control function block (204) represents a control action, and further comprising driving the process value toward the setpoint by the PID control loop feedback process using an adaptive threshold.

13. The method of claim 12, further comprising defining the adaptive threshold as a range between upper and lower thresholds.

14. The method of claim 13, further comprising modifying the upper and lower thresholds as a function of a moving average of an error between the process value and the setpoint and clamping the moving average to prevent the upper and lower thresholds from converging equal to the setpoint.

15. The method of claim 12, further comprising configuring the PID control function block (204) to repeatedly execute until the process value is within the adaptive threshold.
